# EUROPÄISCHE PATENTANMELDUNG

(11) **EP 2 407 282 A2**
(43) Veröffentlichungstag der Anmeldung: **18.01.2012**
(21) Anmeldenummer: 11172956.2
(22) Anmeldetag: 07.07.2011
(51) Int. Cl.: B25J 9/16

(54) **Verfahren zum Vermessen eines Roboterarms eines Industrieroboters**

(30) Priorität: 12.07.2010 DE 102010031248
(71) Anmelder: KUKA Roboter GmbH, 86165 Augsburg (DE)
(72) Erfinder: Purrucker, Thomas, 80689 München (DE); Mittmann, Ralf, 86415 Mering (DE); Groll, Michael, 86167 Augsburg (DE); Hager, Markus, 86152 Augsburg (DE); Kaderk, Sebastian, 86199 Augsburg (DE)
(74) Vertreter: Patentanwälte Funk & Böss GbR

(57) **Zusammenfassung**

Die Erfindung betrifft Verfahren zum Vermessen eines eine Befestigungsvorrichtung (5) für einen Endeffektor aufweisenden Roboterarms (2) eines Industrieroboters (1), der am Ort seiner Anwendung aufgestellt ist. Der Industrieroboter (1) weist den Roboterarm (2) und eine Steuervorrichtung (3) auf, die eingerichtet ist, den Roboterarm (2) derart zu bewegen, dass die Befestigungsvorrichtung (5) eine innerhalb eines der Anwendung des Industrieroboters (2) zugeordneten Arbeitraums (9) vorbestimmte Bewegung durchführt.

## Beschreibung

Die Erfindung betrifft ein Verfahren zum Vermessen eines Roboterarms eines Industrieroboters.

Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren Achsen und programmierbare Steuerungen (Steuervorrichtungen) auf, die während des Betriebs die Bewegungsabläufe des Industrieroboters steuern bzw. regeln.

Für eine zufrieden stellende Steuerung oder Regelung der Roboter weisen die Steuerungen physikalische Modelle des Roboterarms auf. Die allgemeinen räumlichen Bewegungen des Roboterarms werden mit einem kinematischen Modell des Roboterarms beschrieben, das im Wesentlichen die Geometrie des Roboterarms ohne auf den Roboterarm wirkende Kräfte oder Momente beschreibt. Durch die eventuell auch lastabhängigen Kräfte oder Momente hervorgerufene Verformungen des Roboterarms können jedoch dazu führen, dass sich eine Ist-Position des Roboterarms von seiner Soll-Position unterscheidet.

Für eine verbesserte dynamische Steuerung oder Regelung kann der Roboter auch ein Dynamik-Modell aufweisen, das unter Berücksichtigung von Masseeigenschaften einen Zusammenhang zwischen Koordinaten der Achsen des Roboterarms, deren Geschwindigkeiten und Beschleunigungen, sowie Kräften und Momenten beschreibt.

Um den eventuell auftretenden Unterschied zwischen einer Ist-Position des Roboterarms und seiner Soll-Position im kinematischen Modell zumindest zu reduzieren, können für die statischen Positionsfehler die Masseeigenschaften und Elastizitäten des Roboterarms berücksichtigt werden, wodurch die Absolutgenauigkeit des Roboters verbessert wird. Dies kann mittels eines so genannten absolutgenauen Modells des Roboterarms berücksichtigt werden, d.h. ein Modell mit Berücksichtigung von in der Regel exemplarspezifischen statischen Verformungen.

Die Aufgabe der Erfindung ist es, ein Verfahren anzugeben, mit dem die Genauigkeit der Bewegung des Roboterarms am Aufstellort verbessert oder überprüft werden kann.

Die Aufgabe der Erfindung wird gelöst durch ein Verfahren zum Vermessen eines eine Befestigungsvorrichtung für einen Endeffektor aufweisenden Roboterarms eines Industrieroboters, der am Ort seiner Anwendung aufgestellt ist, wobei der Industrieroboter den Roboterarm und eine Steuervorrichtung aufweist, die eingerichtet ist, den Roboterarm derart zu bewegen, dass die Befestigungsvorrichtung eine innerhalb eines der Anwendung des Industrieroboters zugeordneten Arbeitraums vorbestimmte Bewegung durchführt, aufweisend folgende Verfahrensschritte:
- Aufstellen eines mobilen, zur Vermessung des Roboterarms geeigneten Kamerasystems am Ort der Anwendung des Industrieroboters,
- zumindest indirektes Einmessen eines dem Roboterarm zugeordneten, ortsfesten Roboter-Basis-Koordinatensystems bezüglich des Kamerasystems,
- Ansteuern des Roboterarms derart, dass die Befestigungsvorrichtung vorbestimmte Soll-Positionen und/oder Soll-Posen innerhalb des Arbeitsraums einnimmt,
- Ermitteln der Ist-Positionen und/oder Ist-Posen der Befestigungsvorrichtung mittels des Kamerasystems, und
- Ermitteln eines Fehlers zwischen den Ist-Positionen und/oder Ist-Posen und den Soll-Positionen und/oder Soll-Posen.

Erfindungsgemäß wird demnach der Roboterarm am Aufstellort seiner Anwendung mittels des mobilen Kamerasystems vermessen. Ein geeignetes Kamerasystem ist z.B. ein portabler oder mobiler Lasertracker. Ein Lasertracker ist ein Messgerät, das durch eine Kombination aus Winkelmessung und interferometrischer Laserdistanzmessung die 3D-Punktkoordinaten eines Objekts, für das erfindungsgemäße Verfahren also der Befestigungsvorrichtung für den Endeffektor, erfasst.

Um den Roboterarm vermessen zu können, wird zunächst das Kamerasystem bezüglich des Roboterarms, insbesondere bezüglich des ortsfesten Roboter-Basis-Koordinatensystems oder eines weiteren Koordinatensystems, dessen Beziehung zum Roboter-Basis-Koordinatensystem bekannt ist, eingemessen. Anschließend wird der Roboterarm derart bewegt, dass die Befestigungsvorrichtung vorbestimmte Posen oder Positionen einnimmt. Die realen Posen bzw. Positionen, die Ist-Posen bzw. Ist-Positionen werden mit dem Kamerasystem ermittelt, wodurch die Fehler zwischen den Ist- und Soll-Posen bzw. Positionen bestimmt werden können. Unter Pose bzw. Lage versteht man die Position und Orientierung im Raum eines Punktes oder Gegenstandes.

Erfindungsgemäß werden jedoch lediglich solche Positionen bzw. Posen der Befestigungsvorrichtung berücksichtigt, die sich innerhalb des Arbeitsraums befinden, der dem Industrieroboter am Aufstellort zugeordneten Anwendung zugeordnet ist, bzw. wird erfindungsgemäß der Roboterarm nur derart bewegt, dass die Befestigungsvorrichtung innerhalb dieses Arbeitsraums verbleibt. Dadurch ist es möglich, den Roboterarm genauer für die spezielle Anwendung des Industrieroboters zu vermessen.

Um die Genauigkeit der Vermessung zu erhöhen, kann der Roboterarm derart bewegt werden, dass die Befestigungsvorrichtung nur solche Positionen und/oder Posen einnimmt, die die Befestigungsvorrichtung während der für den Industrieroboter bestimmten Anwendung auch tatsächlich einnimmt.

Mittels des erfindungsgemäßen Verfahrens kann z.B. die Genauigkeit eines absolutgenauen Robotermodells vom Roboterarm, das zur Bewegung des Roboterarms verwendet wird, am Aufstellort überprüft werden. Das absolutgenaue Robotermodell ist z.B. in der Steuervorrichtung hinterlegt und/oder wurde beim Hersteller des Roboterarms berechnet. Für das Vermessen kann dazu der Roboterarm basierend auf dem absolutgenauen Robotermodell des Roboterarms bewegt werden.

Gemäß einer Ausführungsform des erfindungsgemäßen Verfahrens können zur Überprüfung des absolutgenauen Robotermodells zusätzlich folgende Verfahrensschritte durchgeführt werden:
- Überprüfen, ob der Fehler innerhalb einer vorgegebenen Toleranzgrenze liegt, und
- Betreiben des Industrieroboters mittels des absolutgenauen Robotermodells nur dann, wenn der Fehler innerhalb der Toleranzgrenze liegt.

Liegt der Fehler außerhalb der Toleranzgrenze, dann kann es z.B. vorgesehen sein, ein aktualisiertes absolutgenaues Robotermodell vom Roboterarm aufgrund der mittels des Kamerasystems ermittelten Ist-Positionen und/oder Ist-Posen der Befestigungsvorrichtung zu erstellen, und den Industrieroboter mittels des aktualisierten absolutgenauen Robotermodell zu betreiben.

Die Überprüfung des absolutgenauen Robotermodells kann auch in regelmäßigen und/oder unregelmäßigen Abständen wiederholt werden.

Umfasst der Industrieroboter kein absolutgenaues Robotermodell, dann kann der Industrieroboter auch nachträglich mit einem solchen nachgerüstet werden, beispielsweise gemäß folgender Schritte:
- Erstellen eines absolutgenauen Robotermodells vom Roboterarm aufgrund der mittels des Kamerasystems ermittelten Ist-Positionen und/oder Ist-Posen der Befestigungsvorrichtung, und
- Betreiben des Industrieroboters mittels des absolutgenauen Robotermodells.

Die Positioniergenauigkeit von Robotersystemen kann durch die Verwendung eines absolutgenauen Robotermodells verbessert werden. Dabei kann im Vorfeld jeder einzelne Roboterarm vermessen und somit Fertigungsungenauigkeiten bestimmt werden. Aus diesen Informationen kann beispielsweise durch ein Optimierverfahren ein mathematisches Robotermodel, das absolutgenaue Robotermodell, bestimmt werden. Dieses Modell kann vor Auslieferung des Roboters ermittelt werden.

Mittels des erfindungsgemäßen Verfahrens wird eine spätere Überprüfung ermöglicht. Aufgrund des erfindungsgemäßen Verfahrens wird ein mobil einsetzbares Vermessungsverfahren bereitgestellt, mit dem beispielsweise Roboter, insbesondere positioniergenaue Roboter z.B. in regelmäßigen Abständen auf ihre Genauigkeit überprüft und gegebenenfalls neue Modellparameter ermittelt werden können. Durch das erfindungsgemäße Verfahren wird es ermöglicht, insbesondere positioniergenaue Roboter auf Genauigkeit zu verifizieren und auch gegebenenfalls neue Modellparameter zu bestimmen. Durch diese Möglichkeit wäre beispielsweise eine Einführung eines Zertifikats denkbar, welches die Positioniergenauigkeit von Robotern zeitlich begrenzt. Danach ist eine Überprüfung der Genauigkeit erforderlich, um das Zertifikat zu erneuern.

Gerade für Anwendungen, die auf eine sehr gute Positionierbarkeit angewiesen sind, wie z.B. die Inline Messtechnik oder die Medizintechnik, ist dies sinnvoll. Zusätzlich kann durch ein solches mobiles Vermessungssystem die Genauigkeit von Robotersystemen im jeweiligen Arbeitsraum noch einmal erhöht werden. Dabei können die Roboterstellungen, die durch die jeweilige Anwendung gefordert werden, vermessen und zur Optimierung des mathematischen Modells verwendet werden. Mit diesem Verfahren kann man den Roboter in seinem lokalen Arbeitsraum sehr genau machen. Mit einem solchen mobilen Vermessungsverfahren ist man auch in der Lage, Roboter auch erst nachträglich zu vermessen und durch ein mathematisches Modell, welches die einzelnen Fehler beschreiben, die Absolutgenauigkeit zu erhöhen.

Mithilfe eines externen Messsystems, z.B. eines Lasertrackers, kann der Unterschied zwischen der tatsächlichen Position (Messung des externen Messsystems) und der eigentlich anzufahrenden Position (aktuelle Roboterposition, die die Steuervorrichtung berechnet hat) ermittelt werden. Wiederholt man gegebenenfalls diesen Vorgang mit einer genügend hohen Anzahl an Roboterposen, bekommt man genügend Informationen, um z.B. mit einem Optimierverfahren Modellparameter zu ermitteln. Der Unterschied zwischen den Sollwerten und den Istwerten wird gegebenenfalls an genügend vielen Roboterposen bestimmt. Dieser Messvorgang kann zum einen für die Verifikation des bestehenden Robotermodells verwendet werden, aber auch für die Berechnung neuer Modellparameter.

Ein Ausführungsbeispiel der Erfindung ist exemplarisch in den beigefügten schematischen Figuren dargestellt. Es zeigen:
- Fig. 1: einen Industrieroboter und ein Messsystem zum Vermessen des Industrieroboters und
- Fig. 2: ein Flussdiagramm, welches Schritte zum Vermessen des Industrieroboters veranschaulicht.

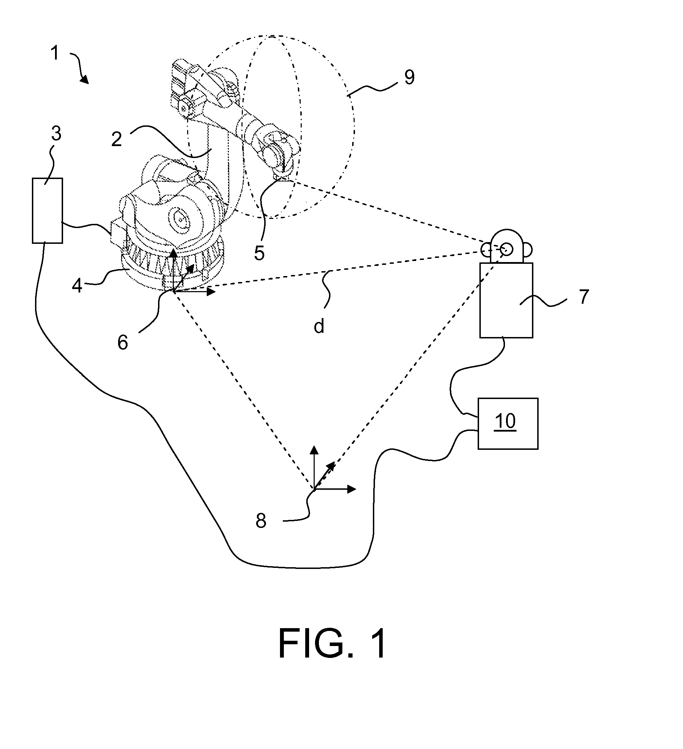

Die Fig. 1 zeigt in einer perspektivischen Darstellung einen Industrieroboter 1 mit einem Roboterarm 2 und mit einer Steuervorrichtung 3. Der Industrieroboter 1 bzw. der Roboterarm 2 befinden sind im Falle des vorliegenden Ausführungsbeispiels bereits ausgeliefert und sind bereits am Aufstellort für ihren Einsatz bzw. ihre Anwendung aufgestellt.

Der Roboterarm 2 umfasst im Falle des vorliegenden Ausführungsbeispiels mehrere nacheinander angeordnete und mittels Gelenke verbundene Glieder. Bei den Gliedern handelt es sich insbesondere um ein ortsfestes oder bewegliches Gestell 4 und ein relativ zum Gestell 4 um eine vertikal verlaufende Achse drehbar gelagertes Karussell. Weitere Glieder des Roboterarms 2 sind im Falle des vorliegenden Ausführungsbeispiels eine Schwinge, ein Ausleger und eine vorzugsweise mehrachsige Roboterhand, an der eine als Flansch 5 ausgebildete Befestigungsvorrichtung für einen nicht näher dargestellten Endeffektor angeordnet ist.

Die Schwinge ist am unteren Ende z.B. an einem nicht näher dargestellten Schwingenlagerkopf auf dem Karussell um eine vorzugsweise horizontale Achse schwenkbar gelagert. Am oberen Ende der Schwinge ist wiederum um eine ebenfalls vorzugsweise horizontale Achse der Ausleger schwenkbar gelagert. Dieser trägt endseitig die Roboterhand mit ihren vorzugsweise drei Achsen.

Dem Industrieroboter 1 bzw. dessen Roboterarm 2 ist ein Roboter-Basis-Koordinatensystem 6 zugeordnet, das ortsfest bezüglich des Gestells 4 des Roboterarms 2 ist. Das Roboter-Basis-Koordinatensystem 6 ist insbesondere ein kartesisches Koordinatensystem.

Um den Industrieroboter 1 bzw. dessen Roboterarm 2 zu bewegen, umfasst dieser in allgemein bekannter Weise mit der Steuervorrichtung 3 verbundene Antriebe, die insbesondere elektrische Antriebe sind. Auf der Steuervorrichtung 3, die beispielsweise als ein PC ausgeführt ist, läuft ein Rechenprogramm, das in dem Fachmann im Prinzip bekannter Weise die elektrischen Antriebe derart ansteuert, dass der Roboterarm 2 bzw. der Flansch 5 eine vorgegebene Bewegung ausführt.

Im Falle des vorliegenden Ausführungsbeispiels ist die Steuervorrichtung 3 derart eingerichtet, dass sie basierend auf einem absolutgenauen Robotermodell des Roboterarms 2 die Bewegung des Roboterarms 2 steuert bzw. regelt. Dazu wurde z.B. der Roboterarm 2 beim Hersteller vermessen, wie diese üblich ist, um für das absolutgenaue Robotermodell benötigte Vermessungsdaten zu erhalten. Diese Daten sind z.B. in der Steuervorrichtung 3 gespeichert oder es wurde beim Hersteller aufgrund der Vermessungsdaten das absolutgenaue Robotermodell errechnet und auf der Steuervorrichtung 3 hinterlegt. Es ist aber auch möglich, dass der Industrieroboter 1 bzw. der Roboterarm 2 ohne ein absolutgenaues Robotermodell bzw. ohne den entsprechenden Daten ausgeliefert wurde.

Der Industrieroboter 1 ist derart programmiert, dass er eine vorgegebene Anwendung durchführen soll. Für diese Anwendung ist dem Industrieroboter 1 ein Arbeitsraum 9 zugeordnet, innerhalb dessen der Roboterarm 2 derart von der Steuervorrichtung 3 bewegt wird, dass der Flansch 5 Positionen bzw. Posen bzw. Lagen einnimmt, die innerhalb des Arbeitsraums 9 angeordnet sind.

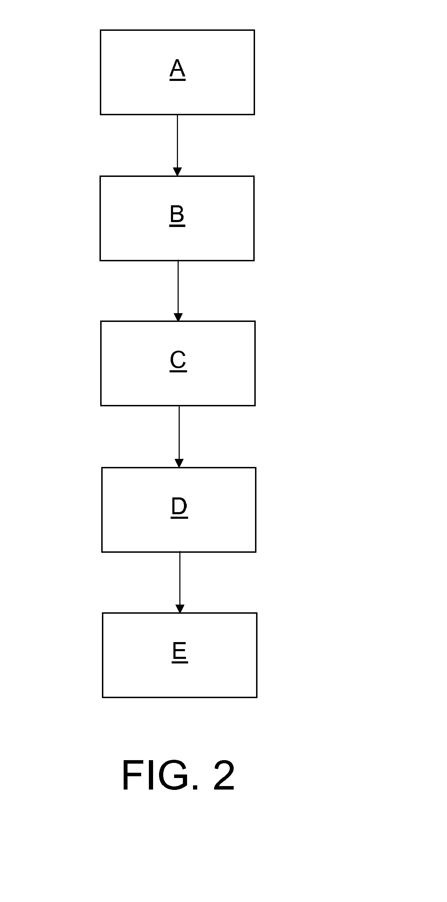

Im Falle des vorliegenden Ausführungsbeispiels ist es vorgesehen, den Roboterarm 2 am Aufstellort für die Anwendung des Industrieroboters 1 mittels eines mobilen Messsystems nochmals zu vermessen, um die beim Hersteller durchgeführte Vermessung des Roboterarms 2 zu überprüfen oder Vermessungsdaten zu erhalten, um den Industrieroboter 1 mit einem absolutgenauen Robotermodell nachzurüsten. Die Vermessung des Roboterarms 2 ist in einem in der Fig. 2 gezeigten Flussdiagramm veranschaulicht.

Im Falle des vorliegenden Ausführungsbeispiels handelt es sich bei dem mobilen Messsystem um eine mobile 3-D Messkamera, insbesondere um einen portablen oder mobilen Lasertracker 7. Ein Lasertracker ist ein Messgerät, das durch eine Kombination aus Winkelmessung und interferometrischer Laserdistanzmessung die 3D-Punktkoordinaten eines Objekts erfasst.

Um mittels des Lasertrackers 7 den Roboterarm 2 zu vermessen, wird zunächst das Roboter-Basis-Koordinatensystem 6 eingemessen, d.h. es wird der Abstand d zwischen dem Lasertracker 7 und dem Roboter-Basis-Koordinatensystem 6, insbesondere dessen Ursprung, ermittelt bzw. es wird die Position, gegebenenfalls die Lage des Roboter-Basis-Koordinatensystems 6, insbesondere dessen Ursprung, relativ zum Lasertracker 7 ermittelt, Schritt A des Flussdiagramms der Fig. 2. Alternativ kann auch die Position bzw. Lage eines weiteren Koordinatensystems 8, insbesondere dessen Ursprung, relativ zum Lasertracker 7 ermittelt werden, wobei die Position bzw. Lage des weiteren Koordinatensystems 8 relativ zum Roboter-Basis-Koordinatensystem 6 bekannt ist.

Für die Vermessung des Roboterarms 2, Schritt B des Flussdiagramms, steuert die Steuervorrichtung 3 gegebenenfalls basierend auf dem absolutgenauen Robotermodell vom Roboterarm 2 den Roboterarm 2 derart an, dass dessen Flansch 5 verschiedene, vorgegebene Positionen, gegebenenfalls Lagen, d.h. Positionen und Orientierungen, einnimmt. Des Weiteren wird der Roboterarm 2 nur für solche Positionen bzw. Lagen/Posen des Flansches 5 mittels des Lasertrackers 7 vermessen, die sich innerhalb des Arbeitraums 9 befinden. Die Vermessung des Roboterarms 2 für die verschiedenen Positionen bzw. Lagen des Flansches 5 basiert auf einer Ist-Positionsbestimmung bzw. einer Ist-Lagebestimmung mittels des Lasertrackers 7.

Da die Beziehung zwischen dem Lasertracker 7 und der Position bzw. Lage des Roboterarms 2 bzw. zwischen dem Lasertracker 3 und dem Roboter-Basis-Koordinatensystem 6 bekannt ist, kann der Fehler zwischen der mittels des Lasertrackers 3 ermittelten Ist-Position bzw. Ist-Lage des Flansches 5 innerhalb des Arbeitsraums 9 und der aufgrund der Ansteuerung des Roboterarms 2 gewollten Soll-Position bzw. Soll-Lage des Flansches 5 bestimmt werden, Schritt C des Flussdiagramms. Dieser Fehler kann beispielsweise mittels eines mit der Steuervorrichtung 3 und dem Lasertracker 7 verbundenen Rechners 10 bestimmt werden. Es kann auch vorgesehen sein, dass für die Bestimmung des Fehlers zwischen den Ist-Positionen/Ist-Lagen und den Soll-Positionen/Soll-Lagen des Flanschens 5 nur solche Positionen/Lagen verwendet werden, die der Flansch 5 während der für den Industrieroboter 1 bestimmten Anwendung auch tatsächlich einnimmt.

Im Falle des vorliegenden Ausführungsbeispiels wird anschließend z.B. mittels des Rechners 10 der ermittelte Fehler mit einer vorgegebenen Toleranzgrenze verglichen und nur dann der Industrieroboter 1 in Betrieb genommen, wenn der Fehler kleiner als die vorgegebene Toleranzgrenze ist, Schritt D des Flussdiagramms.

Des Weiteren kann es vorgesehen sein, dass der Roboterarm 2 in zeitlichen Abständen, die regelmäßig oder auch unregelmäßig sein können, mittels des Lasertrackers 7, wie gerade beschrieben, vermessen wird, um die Genauigkeit des absolutgenauen Robotermodells vom Roboterarm 2 zu überprüfen, Schritt E des Flussdiagramm. Dann ist es möglich vorzusehen, nur dann den Industrieroboter 1 unverändert weiter zu betreiben, wenn der Fehler zwischen den Ist-Positionen/Ist-Lagen und den Soll-Positionen/Soll-Lagen des Flansches 5 kleiner als die vorgegebene Toleranzgrenze ist. Andernfalls kann es vorgesehen sein, aufgrund der Vermessung des Roboterarms 2 mittels des Lasertrackers 7 die Vermessungsdaten für den Roboterarm 2 zu aktualisieren, um das absolutgenaue Robotermodell vom Roboterarm 2 zu aktualisieren.

Sollte der Industrieroboter 1 ab Werk nicht mit einem absolutgenauen Robotermodell bzw. mit den entsprechenden Vermessungsdaten ausgestattet worden sein, so ist es auch möglich, die nötigen Vermessungsdaten am Aufstellort des Roboterarms 2 mittels des Lasertrackers 7 zu ermitteln, indem der Roboterarm 2 mittels des Lasertrackers 7 vermessen wird. Dazu steuert die Steuervorrichtung 3 den Roboterarm 2 derart an, dass dessen Flansch 5 verschiedene, vorgegebene Positionen, gegebenenfalls Lagen bzw. Posen innerhalb des Arbeitsraums 9 einnimmt. Es kann auch vorgesehen sein, dass für die Bestimmung des Fehlers zwischen den Ist-Positionen/Ist-Lagen und den Soll-Positionen/Soll-Lagen des Flanschens 5 nur solche Positionen/Lagen verwendet werden, die der Flansch 5 während der für den Industrieroboter 1 bestimmten Anwendung auch tatsächlich einnimmt.

## Patentansprüche

1. Verfahren zum Vermessen eines eine Befestigungsvorrichtung (5) für einen Endeffektor aufweisenden Roboterarms (2) eines Industrieroboters (1), der am Ort seiner Anwendung aufgestellt ist, wobei der Industrieroboter (1) den Roboterarm (2) und eine Steuervorrichtung (3) aufweist, die eingerichtet ist, den Roboterarm (2) derart zu bewegen, dass die Befestigungsvorrichtung (5) eine innerhalb eines der Anwendung des Industrieroboters (2) zugeordneten Arbeitraums (9) vorbestimmte Bewegung durchführt, aufweisend folgende Verfahrensschritte:
- Aufstellen eines mobilen, zur Vermessung des Roboterarms (2) geeigneten Kamerasystems (7) am Ort der Anwendung des Industrieroboters (1),
- zumindest indirektes Einmessen eines dem Roboterarm (2) zugeordneten, ortsfesten Roboter-Basis-Koordinatensystems (6) bezüglich des Kamerasystems (7),
- Ansteuern des Roboterarms (2) derart, dass die Befestigungsvorrichtung (5) vorbestimmte Soll-Positionen und/oder Soll-Posen innerhalb des Arbeitsraums (9) einnimmt,
- Ermitteln der Ist-Positionen und/oder Ist-Posen der Befestigungsvorrichtung mittels des Kamerasystems (7), und
- Ermitteln eines Fehlers zwischen den Ist-Positionen und/oder Ist-Posen und den Soll-Positionen und/oder Soll-Posen.

2. Verfahren nach Anspruch 1, aufweisend Ansteuern des Roboterarms (2) derart, dass die Befestigungsvorrichtung (5) nur solche Positionen und/oder Posen einnimmt, die die Befestigungsvorrichtung (5) während der für den Industrieroboter (1) bestimmten Anwendung auch tatsächlich einnimmt.

3. Verfahren nach Anspruch 1 oder 2, aufweisend Bewegen des Roboterarms (2) basierend auf einem insbesondere in der Steuervorrichtung (3) hinterlegten absolutgenauen Robotermodell des Roboterarms (2).

4. Verfahren nach Anspruch 3, zusätzlich aufweisend
- Überprüfen, ob der Fehler innerhalb einer vorgegebenen Toleranzgrenze liegt, und
- Betreiben des Industrieroboters (1) mittels des absolutgenauen Robotermodells nur dann, wenn der Fehler innerhalb der Toleranzgrenze liegt.

5. Verfahren nach Anspruch 3, zusätzlich aufweisend
- Überprüfen, ob der Fehler innerhalb einer vorgegebenen Toleranzgrenze liegt,
- Erstellen eines aktualisierten absolutgenauen Robotermodells vom Roboterarm (2) aufgrund der mittels des Kamerasystems (7) ermittelten Ist-Positionen und/oder Ist-Posen der Befestigungsvorrichtung (5), wenn der Fehler außerhalb der Toleranzgrenze liegt, und
- Betreiben des Industrieroboters (1) mittels des aktualisierten absolutgenauen Robotermodells.

6. Verfahren nach Anspruch 4 oder 5, regelmäßiges und/oder unregelmäßiges Wiederholen der Schritte der Ansprüche 1 bis 3 oder der Ansprüche 1, 2 und 4.

7. Verfahren nach Anspruch 1 oder 2, zusätzlich aufweisend folgende Verfahrensschritte:
- Erstellen eines absolutgenauen Robotermodells vom Roboterarm (2) aufgrund der mittels des Kamerasystems (7) ermittelten Ist-Positionen und/oder Ist-Posen der Befestigungsvorrichtung (5), und
- Betreiben des Industrieroboters (1) mittels des absolutgenauen Robotermodells.

8. Verfahren nach einem der Ansprüche 1 bis 7, bei dem das Kamerasystem einen mobilen Lasertracker (7) umfasst.
